# EUROPEAN PATENT APPLICATION

(11) **EP 4 804 722 A1**
(43) Date of publication of application: **09.09.2026**
(21) Application number: 25382198.7
(22) Date of filing: 05.03.2025
(51) Int. Cl.: H05B 1/02, H05B 6/64

(54) **METHOD AND OVEN FOR PREPARING FOOD**

(71) Applicant: Immobles del Segria, S.L., 25123 Torrefarrera (Lleida) (ES)
(72) Inventor: TORNÉ FICAPAL, Albert, 25123 TORREFARRERA (Lleida) (ES); FARRAN SEUMA, Joel, 25123 TORREFARRERA (Lleida) (ES)
(74) Representative: Herrero & Asociados, S.L.

(57) **Abstract**

The method comprises: determining a plurality of cooking parameters for a plurality of foods, the cooking parameters including cooking time; introducing a first food of said plurality of foods into an oven (1); initiating a first cooking of the first food; determining which foods among said plurality of foods have cooking parameters that are compatible with the first cooking; introducing a second food into the oven (1), the second food having cooking parameters compatible with the first cooking; initiating a second cooking of the second food simultaneously with the first cooking according to simultaneous cooking parameters; removing the first food from the oven when the cooking time of the first food has elapsed; and adjusting the parameters of the second cooking when the first food is removed from the oven (1).

It allows the simultaneous cooking of two or more foods.

## Description

### Object of the invention

The present invention relates to a method and an oven for preparing food, which makes it possible to carry out simultaneous cooking at the same time as cooking that is already in progress.

### Background of the invention

Combined ovens are known that use convection and microwaves to regenerate food quickly. These ovens, commonly called high-speed ovens, are professional appliances that combine multiple heating technologies to cook, reheat or brown food quickly and efficiently.

This type of oven is used in the food industry, especially in restaurants, bakeries and fast-food establishments, but is also gaining popularity in the domestic market due to its versatility and speed.

Although these ovens can be used for cooking food, they are generally used to regenerate food that has already been cooked and previously refrigerated to bring it to the optimum serving temperature. These thermal regeneration processes usually last from seconds to a few minutes.

A high-speed oven uses a combination of cooking methods to achieve optimum results in less time than conventional ovens. The main technologies include:
- Conduction, in which the food is placed on a preheated cooking base, which transfers energy to the food by conduction.
- Forced convection, in which a fan directs a flow of hot air at high speed over the food.

This ensures even browning and crispness on the surface of the food and, for example, the temperature usually reaches between 200 °C and 300 °C, depending on the model.

In addition, a microwave generates microwave energy that penetrates the food to heat it quickly from the inside, which is ideal for drastically reducing cooking time without compromising the external texture.

This combination of energy transfer technologies to the food allows for shorter thermal regeneration times of the food compared to a conventional oven. They also allow for crispy textures, unlike a conventional microwave oven. Therefore, they allow the food to regenerate in temperature at a high speed, while maintaining the organoleptic qualities of the food.

In fast food establishments it is common that during peak hours the accelerated ovens are working at full capacity in terms of usage time, but not at full capacity. For example, a customer orders a sandwich that needs a regeneration time of one minute, and a new portion is not heated until this time has elapsed. However, two or more portions could fit in the oven, but there is no accelerated cooking oven that can optimally control the cooking of several portions once the first one is already in progress.

This is because regeneration of multiple servings in combined ovens poses challenges related to inconsistent heating, as adding more servings requires adjusting the microwave power to ensure that each serving receives an adequate amount of energy.

### Description of the invention

Therefore, an objective of the present invention is to provide a method and an oven for preparing food that adapts the cooking parameters of two or more recipes while these are executed simultaneously, and that retains the cooking parameters entered by the user when a cooking is being executed individually.

The patent description focuses on the simultaneous cooking of two foods, although the method can be applied to an indefinite number of portions. A procedure is proposed for calculating the optimal cooking parameters of a set of two foods, based on the individual parameters of each food. For a person skilled in the art, it would be obvious that the parameters recalculated by this method can be considered as those of a single food, allowing a third food to be incorporated and the process to be repeated recursively.

With the method and oven for preparing food of the invention, the aforementioned disadvantages are solved, presenting other advantages that will be described below.

The method and an oven for preparing food according to the present invention are described in the respective independent claims, and the dependent claims include additional features which are optional.

The method for preparing food comprises the following steps:
a) determining a plurality of cooking parameters for a plurality of foods, the cooking parameters including cooking time;
(b) introducing a first food of said plurality of foods into an oven;
(c) initiating a first cooking of the first food;
(d) determining which foods among the plurality of foods have cooking parameters that are compatible with the first cooking;
(e) introducing a second food into the oven, the second food having cooking parameters compatible with the first cooking;
(f) initiating a second cooking of the second food simultaneously with the first cooking accordance with simultaneous cooking parameters;
(g) removing the first food from the oven when the cooking time of the first food has elapsed; and
(h) adjusting the parameters of the second cooking when the first food is removed from the oven.

Preferably, the method for preparing food according to the present invention also comprises repeating steps e), f), g) and h) repeatedly for more than two foods.

According to a preferred embodiment, the cooking parameters also comprise the temperature inside the oven, the power of a microwave generator of the oven and the speed of a fan of a convection motor of the oven.

According to a preferred embodiment, step (d) comprises determining cooking compatibility by the following rule: ${T}_{1} - {K}_{T} < = {T}_{2} < = {T}_{1} + {K}_{T}$ ${P}_{1} - {K}_{P} < = {P}_{2} < = {P}_{1} + {K}_{P}$ ${v}_{1} - {K}_{v} < = {v}_{2} < = {v}_{1} + {K}_{v}$ being:
Tᵢ = temperature of cooking i, in the range 30-300 °C;
K_{T} = temperature range, in the range 0-300 °C;
tᵢ = time of cooking i, in the range 00:01 to 10:00 minutes;
Pᵢ = power of cooking i, in % of the maximum power;
K_{P} = power range, in % of maximum power;
vᵢ = convection fan speed of cooking i, in % above maximum speed;
Kᵥ = speed range of the convection fan, in % above maximum speed;
i = an integer greater than or equal to 1.

In addition, preferably, during step f) the parameters of the simultaneous cooking are also calculated according to the following equations: ${T}_{ab} = \left({T}_{a}+{T}_{b}\right) / 2$ ${t}_{ab} = MIN \left(remaining {t}_{a}, {t}_{b}\right)$ ${v}_{ab} = \left({v}_{a}{+}_{v \left(b\right)}\right) / 2$ ${P}_{ab} = \left(1+K\right) * \left({P}_{a}+{P}_{b}\right) / 2$ being:
Tₐ = the temperature of the first cooking;
T_{b} = the temperature of the second cooking;
T_{ab} = the temperature during the first and second simultaneous cookings;
tₐ = the time of the first cooking;
t_{b} = the time of the second cooking;
t_{ab} = the time during the first and second simultaneous cookings;
vₐ = the fan speed during the first cooking;
v_{b} = the fan speed during the second cooking;
v_{ab} = the fan speed during the first and second simultaneous cookings;
Pₐ = the power of the microwave generator during the first cooking;
P_{b} = the power of the microwave generator during the second cooking;
P_{ab} = the power of the microwave generator during the first and second simultaneous cookings;
K = a number between 0 and 1.

According to a second aspect, the oven for preparing food according to the present invention comprises a control electronics which performs the method as described above.

With the method according to the present invention it is possible to adapt the parameters of a cooking process according to the recipes being executed, guaranteeing a homogeneous result.

In particular, it allows, given a cooking in progress, to simultaneously execute another cooking. Furthermore, the method according to the present invention adapts the cooking parameters of the two recipes while they are executed simultaneously, and retains the cooking parameters entered by the user when a cooking is being executed individually.

In addition, the method and oven according to the present invention provide the following advantages:
- Greater efficiency in the kitchen: It allows multiple cooking operations to be carried out simultaneously without having to wait for the first one to finish, optimizing the use of the oven and reducing waiting times.
- Energy use optimization: The method automatically adjusts cooking parameters to maintain efficient cooking, avoiding energy waste and ensuring that food is heated evenly.
- Increased production capacity: Ideal for restaurants and fast-food businesses with high demand, as it allows more orders to be processed in less time.
- Flexibility in operation: By allowing the incorporation of new cooking operations without interrupting those already in progress, the system adapts dynamically to the demand of the establishment.

### Brief description of the drawings

For a better understanding of what has been explained above, some drawings are included in which, schematically and only by way of a non-limiting example, a practical case of embodiment is represented.
Figure 1 is a side elevation section view of the furnace according to the present invention; and
Figure 2 is a time diagram showing an embodiment of the method according to the present invention.

### Description of a preferred embodiment

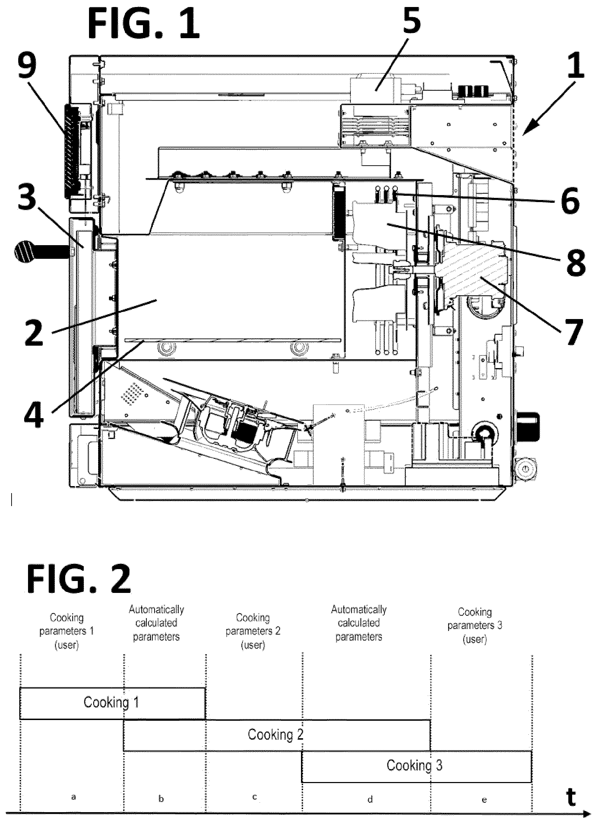

Figure 1 shows an embodiment of the oven (1) according to the present invention, comprising a cooking chamber (2) which is accessible through a door (3).

The oven also comprises a cooking tray (4) on which a food to be cooked is placed, a microwave generator (5), a heat generating resistor (6), a variable speed convection motor (7) linked to a fan (8) on the inside the cooking chamber (2) and control electronics (9).

It is this control electronics (9) that determines the parameters of the method according to the present invention, automatically adjusting the power of the microwave generator (5) according to the active cookings.

An embodiment of the method for preparating food according to the present invention is described below.

Firstly, cooking parameters are entered by the user, i.e. the user enters the cooking parameters for a portion of each type of food into an oven interface. These parameters, which are preferably the temperature inside the oven (T), the cooking time (t), the microwave power (P) and fan speed (v), allow a single portion of food to be optimally regenerated.

It is important to note that the parameters related to fan speed or microwave power can be given in absolute terms, e.g. 4200 rpm or 1000 W, or in percentage terms with respect to the maximum (100 % of 4200 rpm or 30 % of 1000 W).

For example, the user could have created these four cookings, which would be associated with icons describing them:

| Recipe or cooking | Temperature (T) | Time (t) | Power (P) | Speed (v) |
|---|---|---|---|---|
| Sandwich | 275 °C | 1:00 min | 40 % | 70 % |
| Pizza | 275 °C | 1:15 min | 70 % | 100 % |
| Hamburger | 275 °C | 1:00 min | 50 % | 60 % |
| Waffle | 275 °C | 1:30 min | 60 % | 60 % |

The first cooking is then indicated. To do this, the user inserts the food inside the cooking chamber (2) of the oven (1), and presses on the user interface the icon associated with the aforementioned parameters.

If, while a first cooking is in progress, the user wishes to add another cooking at the same time, he/she will press the '+' symbol, or equivalent, of the cooking in progress on the oven interface (1).

Once this has been done, compatible recipes will be displayed that are compatible with the first cooking, i.e. that comply with the following rule: ${T}_{1} - {K}_{T} < = {T}_{2} < = {T}_{1} + {K}_{T}$ ${P}_{1} - {K}_{P} < = {P}_{2} < = {P}_{1} + {K}_{P}$ ${v}_{1} = {K}_{v} < = {v}_{2} < = {v}_{1} + {K}_{v}$

Being
Tᵢ = temperature of cooking i, in the range 30-300 °C;
K_{T} = temperature range, in the range 0-300 °C;
tᵢ = time of cooking i, in the range 00:01 to 10:00;
Pᵢ = power of cooking i, in % of the maximum power;
K_{P} = power range, in % of maximum power;
vᵢ = convection fan speed of cooking i, in % above maximum speed;
Kᵥ = speed range of the convection fan, in % above maximum speed;
i = an integer greater than or equal to 1.

The interval K_{T} establishes how similar in temperature two recipes can be in order to be considered equivalent cooking. A typical value could be 25 °C, and it can be adjusted empirically by increasing this value from 0 until, to the user's perception, two cookings are different.

The range K_{P} establishes how similar in power two recipes can be in order to be considered equivalent cooking. A typical value could be 10 %, and can be adjusted empirically by incrementing this value from 0 until, in the user's perception, two cookings are different.

The range Kᵥ establishes how similar two recipes can be in convection fan speed to consider equivalent cooking. A typical value could be 10 %, and can be adjusted empirically by increasing this value from 0 until, to the user's perception, two cookings are different.

According to this rule, only recipes with similar temperature, power and convection fan speed are preselected and displayed to the user.

In the event that the recipe to be made is compatible, the user will introduce the food into the cooking chamber and press the corresponding icon. At that moment, and as long as there are two simultaneous cookings Cₐ and C_{b}, the oven will calculate the parameters of the simultaneous cooking C_{ab} according to the following equations: ${T}_{ab} = \left({T}_{a}+{T}_{b}\right) / 2$ ${t}_{ab} = MIN \left({t}_{a} remaining, {t}_{b}\right)$ ${v}_{ab} = \left({v}_{a}+v\left(b\right)\right) / 2$ ${P}_{ab} = \left(1+K\right) * \left({P}_{a}+{P}_{b}\right) / 2$

Being:
Tₐ = the temperature of the first cooking;
T_{b} = the temperature of the second cooking;
T_{ab} = the temperature during the first and second simultaneous cookings;
tₐ = the time of the first cooking;
t_{b} = the time of the second cooking;
t_{ab} = the time during the first and second simultaneous cookings;
vₐ = the fan speed during the first cooking;
v_{b} = the fan speed during the second cooking;
v_{ab} = the fan speed during the first and second simultaneous cookings;
Pₐ = the power of the microwave generator during the first cooking;
P_{b} = the power of the microwave generator during the second cooking;
P_{ab} = the power of the microwave generator during the first and second simultaneous cookings;
K= a number between 0 and 1 configurable by the manufacturer in the service menu.

Empirical tests show that a K-factor = 0.2 gives good results for all types of cookings. However, it can be adjusted empirically to optimise the result if the cooking spectrum is more limited.

At the end of the simultaneous cooking time of two recipes, which is the minimum between the remaining time of the first recipe and the time of the second recipe (MIN(remaining tₐ, t_{b}), the user is notified to remove the food whose cooking is finished. Once this is done, the oven will switch to the remaining cooking parameters and, in the same way as for the first cooking, another simultaneous cooking can be added if desired.

Figure 2 shows a graph showing how several cookings take place over time, interlacing single and simultaneous cookings:
The table below shows a summary of the cookings and parameters associated with each of the ranges [a, e] in the graph above, assuming a value of K= 0.2.

| Interval | Recipe or cooking | Parameters | Temperature (T) | Weather (t) | Power (P) | Speed (v) |
|---|---|---|---|---|---|---|
| a | Sandwich | User | 275 °C | 40 s | 40 % | 70 % |
| b | Sandwich + Hamburger | Calculated | 275 °C | 20 s | 54 % | 65 % |
| c | Hamburger | User | 275 °C | 20 s | 50 % | 60 % |
| d | Burger + Waffle | Calculated | 275 °C | 20 s | 66 % | 60 % |
| e | Waffle | User | 275 °C | 50 s | 60 % | 60 % |

Although reference has been made to a specific embodiment of the invention, it is obvious to a person skilled in the art that the method and oven described are susceptible to numerous variations and modifications, and that all the details mentioned can be replaced by technically equivalent ones, without departing from the scope of protection defined by the appended claims.

## Claims

1. A method for preparing food, **characterized in that** it comprises the following steps:
a) determining a plurality of cooking parameters for a plurality of foods, the cooking parameters including cooking time;
(b) introducing a first food of said plurality of foods into an oven (1);
(c) initiating a first cooking of the first food;
(d) determining which foods among the plurality of foods have cooking parameters that are compatible with the first cooking;
(e) introducing a second food into the oven (1), the second food having cooking parameters compatible with the first cooking;
(f) initiating a second cooking of the second food simultaneously with the first cooking accordance with simultaneous cooking parameters;
(g) removing the first food from the oven (1) when the cooking time of the first food has elapsed; and
(h) adjusting the parameters of the second cooking when the first food is removed from the oven (1).

2. Method for preparing food according to claim 1, also comprising repeating steps e), f), g) and h) repeatedly for more than two foods.

3. Method for preparing food according to claim 1 or 2, wherein the cooking parameters also comprise the temperature (T) inside the oven (1), the power (P) of a microwave generator (5) of the oven (1) and the speed (v) of a fan (8) of a convection motor (7) of the oven (1).

4. The method for preparing food according to claim 1, wherein step d) comprises determining cooking compatibility using the following rule: ${T}_{1} - {K}_{T} < = {T}_{2} < = {T}_{1} + {K}_{T}$ ${P}_{1} - {K}_{P} < = {P}_{2} < = {P}_{1} + {K}_{P}$ ${v}_{1} - {K}_{v} < = {v}_{2} < = {v}_{1} + {K}_{v}$ being:
Tᵢ = temperature of cooking i, in the range 30-300 °C;
K_{T} = temperature range, in the range 0-300 °C;
tᵢ = time of cooking i, in the range 00:01 to 10:00;
Pᵢ = power of cooking i, in % of the maximum power;
K_{P} = power range, in % of maximum power;
vᵢ = convection fan speed of cooking i, in % above maximum speed;
Kᵥ = speed range of the convection fan, in % above maximum speed;
i = an integer greater than or equal to 1.

5. The method for preparing food according to claim 1, wherein during step f) the simultaneous cooking parameters (C_{ab}) are also calculated according to the following equations: $\begin{matrix}{T}_{ab} = \left({T}_{a}+{T}_{b}\right) / 2 \\ {t}_{ab} = MIN \left(remaining {t}_{a}, {t}_{b}\right)\end{matrix}$ ${v}_{ab} = \left({v}_{a}+v\left(b\right)\right) / 2$ ${P}_{ab} = \left(1+K\right) * \left({P}_{a}+{P}_{b}\right) / 2$ being:
Tₐ = the temperature of the first cooking;
T_{b} = the temperature of the second cooking;
T_{ab} = the temperature during the first and second simultaneous cookings;
tₐ = the time of the first cooking;
t_{b} = the time of the second cooking;
t_{ab} = the time during the first and second simultaneous cookings;
vₐ = the fan speed during the first cooking;
v_{b} = the fan speed during the second cooking;
v_{ab} = the fan speed during the first and second simultaneous cookings;
Pₐ = the power of the microwave generator during the first cooking;
P_{b} = the power of the microwave generator during the second cooking;
P_{ab} = the power of the microwave generator during the first and second simultaneous cookings;
K = a number between 0 and 1.

6. Oven for preparing food, comprising a control electronics (9) performing the method according to any one of the preceding claims.
